(19) Europäisches Patentamt
European Patent Office
Office européen des brevets

(11) **EP 1 166 696 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(51) Int Cl.⁷: **A47J 31/40**

(21) Anmeldenummer: **01107033.1**

(22) Anmeldetag: **21.03.2001**

(54) **Dosiervorrichtung**

Dosing device

Dispositif doseur

(84) Benannte Vertragsstaaten:
**AT BE CH CY DE DK ES FI FR GB GR IE IT LI LU MC NL PT SE TR**

(30) Priorität: **23.06.2000 DE 10030903**

(43) Veröffentlichungstag der Anmeldung:
**02.01.2002 Patentblatt 2002/01**

(73) Patentinhaber: **Braun GmbH**
**61476 Kronberg (DE)**

(72) Erfinder: **Bielfeldt, Uwe Dr.**
**65812 Bad Soden (DE)**

(56) Entgegenhaltungen:
**US-A- 4 055 114**    **US-A- 5 778 764**

**Beschreibung**

Die Erfindung betrifft eine Dosiervorrichtung gemäß dem Oberbegriff des Patentanspruchs 1.

Bei der Herstellung von Brühgetränken, hauptsächlich Kaffee und Tee, ist eine exakte Dosierung von Kaffeemehl oder Teeblättern, im folgenden Substrat genannt, im Verhältnis zum eingesetzten Brühwasser für einen optimalen Geschmack des Brühgetränks wichtig. Dabei ist die Kontrolle des eingesetzten Substrats sowohl über Volumen, wie auch über eine Massenbestimmung möglich. Die Massenbestimmung ist allerdings i. d.R. das genauere Verfahren.

In der Regel ist der Kaffeemaschine ein separater Meßlöffel beigegeben, um eine Kaffeemehlmenge abzumessen, die zum Aufbrühen von Kaffee gewünschter Stärke gehört. Das Volumen des Meßlöffels ist dabei zur Aufnahme einer Kaffeemehlmenge zum Aufbrühen einer Tasse normal starken Kaffees bemessen. Die damit vorzunehmende Dosierung ist aber zum einen umständlich, weil die exakte Füllmenge des Meßlöffels zu beachten ist und erforderlichenfalls mehrfach zu wiederholen ist, und zum anderen ungeau, wenn der Meßlöffel zu viel oder zu wenig gefüllt ist. Eine gewünschte definierte Änderung der Konzentration bzw. Geschmacksintensität des aufgebrühten Kaffees ist noch schwieriger zu erreichen, weil der Meßlöffel nur ein bestimmtes Aufnahmevolumen hat.

Im Stand der Technik wurden bereits Anstrengungen unternommen, um diesem Problem Abhilfe zu schaffen. So schlägt die DE 297 01 818 U1 eine digitale Kaffeefüllstandsanzeige vor, die es erlauben soll, ein Meßlöffel-Abzählen beim Einfüllen von Kaffeemehl in ein Filtergefäß einer Haushaltskaffeemaschine zu vermeiden. Hierzu ist ein Feingewichtssensor an einer Aufhängung des Filtergefäßes angebracht, der mit einer Digitalanzeige in Verbindung steht, um das in das Filtergefäß gefüllte Kaffeegewicht anzuzeigen. Mit dieser Digitalanzeige kann aber nur dann das Filtergefäß mit dem zum Brühen von Kaffee mit gewünschter Geschmacksintensität erforderlichen Kaffeegewicht gefüllt werden, wenn dieses dem Bediener bekannt ist und das Erreichen dieses Kaffeegewichts auf der Digitalanzeige beobachtet wird. Die Benutzung dieser Digitalanzeige ist auch deshalb umständlich, weil dem Bediener für alle in Frage kommenden Brühwassermengen die jeweils zugehörigen Kaffeemehlmengen bekannt sein müssen bzw. einer Aufzeichnung entnommen werden müssen.

Ferner ist aus der EP 0 536 714 B1 eine automatische Dosiervorrichtung für Mahlgut bekannt, mit der die gewünschte Konzentration des Kaffeesuds selbsttätig erreicht werden soll, indem die Mahlgutmenge bzw. Kaffeemehlmenge mit einer Scheibe, die Kammer bildende gekrümmte Blätter aufweist und die unter einem Mahlgutbehälter angeordnet ist, gesteuert in ein Filtergefäß eingegeben wird. Die Dosiereinrichtung wird durch eine mit einer Steuerschaltung aktivierten Motoreinrichtung betrieben. Die im einzelnen nicht offenbarte Steuerschaltung kann entsprechend der gewünschten Stärke des aufzubrühenden Kaffees programmiert werden. Die Motoreinheit dosiert dann einerseits das Wasservolumen, welches entsprechend der vorgesehenen Anzahl Tassenfüllungen in eine Aufgußkammer geschickt wird und dreht andererseits die Scheibe mit den Kammern, deren in Drehung versetzte Anzahl die Dosierung des Kaffees bestimmt. Der Aufbau dieser automatischen Dosiervorrichtung ist einerseits kompliziert und aufwendig und andererseits ungenau, da das Meßverfahren volumenorientiert ist.

Schließlich ist aus der DE 298 00 175 U1 eine Kaffeemaschine mit Dosiersignalanordnung bekannt, die eine in das Filtergefäß eingefüllte Menge Kaffeemehl mittels eines Kaffeemehlmengensensors selbsttätig erfaßt. Außerdem ist ein Wassermengensensor vorgesehen, der die in einem Wasserbehälter der Kaffeemaschine eingefüllte Brühwassermenge selbsttätig erfaßt. Beide erfaßten Größen werden einer Vergleichseinrichtung zugeführt, die eine Anzeigevorrichtung in der Weise aktiviert, daß die Anzeigevorrichtung bei Erreichen des gewünschten Verhältnisses der Kaffeemehlmenge zur Brühwassermenge selbsttätig von einem ersten Anzeigezustand, der beispielsweise zu geringe Kaffeemehlmenge signalisiert, in einen zweiten Anzeigezustand wechselt, der das Erreichen der Kaffeemehlmenge meldet, die zu einer gewünschten Stärke des aufgebrühten Kaffees führt. Dabei ist die Kaffeemaschine derart aufgebaut, daß ein an dem Gehäuse der Kaffeemaschine angeordnetes Kontaktfederpaar einer Anzeigevorrichtung durch einen vom Filtergefäß hervorstehenden mechanischen Abgriff aktiviert wird, wobei das elektrische Kontaktfederpaar mechanisch mit einem Wassermengensensor gekoppelt ist, der den Abstand des Kontaktfederpaares zum vom Filtergefäß herauskragenden mechanischen Abgriff je nach vorhandener Wassermenge voreinstellt. Bei dieser Lösung handelt es sich ebenfalls um eine komplizierte, in der Herstellung aufwendige und teure elektromechanische Lösung, die die vollständige Integration einer derartigen Dosiersignalanordnung in eine Kaffeemaschine erfordert.

Eine Dosiervorrichtung nach den Oberbegriff des unabhängigen Anspruchs 1 ist aus US-A-4 055 114 bekannt.

Der Erfindung liegt daher die Aufgabe zugrunde, eine Dosiervorrichtung für ein Gerät zur Herstellung von Brühgetränken zu schaffen, mit der eine gewünschte Menge Kaffeemehl, Teeblätter oder anderer Substrate zur exakten Dosierung im Verhältnis zum eingesetzten Brühwasser bestimmt werden kann. Die erfindungsgemäße Dosiervorrichtung soll einfach und kostengünstig herstellbar sein. Ferner soll die Dosiervorrichtung als eigenständige Baugruppe konzipiert sein, so daß sie als Nachrüstbauteil für bereits vorhandene Geräte zur Herstellung von Brühgetränken oder als Dosiervorrichtung für Handaufgußsysteme geeignet ist.

Diese Aufgabe wird durch eine Vorrichtung mit den Merkmalen des Patentanspruches 1 gelöst. Vorteilhafte Ausgestaltungen der Erfindung werden in den Unteransprüchen beschrieben.

In Patentanspruch 1 sind mit Substrat Kaffeemehl oder Teeblätter oder sonstige lösliche Geschmacksträger definiert. Die Konzentration oder Geschmacksintensität ergibt sich aus dem Verhältnis der Wassermenge zu der Substratmenge. So kann ein Kaffee beispielsweise durch eine größere Menge von Kaffeemehl geschmacksintensiver, d.h. "stärker" schmekken, oder aber durch eine geringere Menge Kaffeemehls weniger geschmacksintensiv, d.h. "milder" schmecken. Die Zugabe der Wassermenge wird dabei vom Bediener in üblicher Weise kontrolliert und die Zugabe der Substratmenge kann dann nach entsprechender manueller Vorwahl der Tassenanzahl allein durch Beobachtung der Anzeigeeinrichtung während des Einfüllens des Substrats in den Filter erfolgen. Dabei zeigt die Anzeigeeinrichtung lediglich die Geschmacksintensität an, d.h. also lediglich, ob beispielsweise Kaffee in bezug auf die vorgewählte Tassenzahl "stark", "mild" oder "normal" schmecken wird. Eine gesonderte Abmessung der Substratmenge, beispielsweise durch entsprechende Meßlöffel oder durch Ablesen einer Gewichtsangabe und entsprechenden Vergleich mit einer Referenzliste, entfällt dadurch. Durch die Verwendung einer Feinwaage ist die Dosierung im Verhältnis zum eingesetzten Brühwasser genau und für den Bediener einfach nachzuvollziehen. Ferner ist die erfindungsgemäße Dosiervorrichtung einfach und kostengünstig beispielsweise aus Spritzgußteilen herstellbar, wodurch sie zur Verwendung in herkömmlichen Haushaltsgeräten, wie insbesondere Kaffeemaschinen oder Teebrühmaschinen, geeignet ist. Dabei kann die Anzeigeeinrichtung und das Filtergehäuse bzw. Feinwaage, Filtergehäuse und Anzeige ein einstückiges Kunststoffbauteil sein. Dies reduziert die Stückkosten erheblich, da die Dosiervorrichtung als einfaches Spritzgußteil mit einer minimalen Anzahl von Bauteilen realisiert werden kann.

Eine weitere vorteilhafte Ausführungsform der Erfindung ist in Anspruch 2 dargestellt. Die als Balkenwaage ausgeführte Feinwaage ist einfach und kostengünstig herstellbar. Ferner kann hierdurch ein rein mechanischer Aufbau der Dosiervorrichtung ohne elektrische Sensoren erfolgen, auch wenn eine elektrische Abnahme des Waagebalkenausschlags durch Kraft- oder Wegaufnehmer denkbar ist.

Eine vorteilhafte Weiterbildung der Ausführungsform nach Anspruch 2 wird in Anspruch 3 beschrieben, wobei die Verwendung einer Federdämpfeinrichtung besonders kostengünstig und wartungsfrei ist. Der Meßbereich der Balkenwaage kann dabei in einfacher und kostengünstiger Weise durch eine Einrichtung gemäß Anspruch 4 verstellt werden, wobei bei einer linearen Federkennlinie die Einstellung des Federwegs besonders einfach ist.

Die Einstellung des Federwegs kann beispielsweise durch eine Schiebekulisse gemäß Anspruch 5 oder durch Gleitlager gemäß Anspruch 6 erfolgen, wobei im Falle der Ausgestaltung als Schiebekulisse vorzugsweise eine Zug- oder Druckfeder gemäß Anspruch 7 Verwendung findet. Vorteilhafterweise kann die Schiebekulisse ein aus Kunststoff oder Metall gefertigtes Bauteil mit Abstufungen sein, das längsverschieblich am Filtergehäuse gelagert ist. Die Schiebekulisse dient dabei als Auflager für die Feder der Federdämpfereinrichtung. Durch die Vorwahl der Tassenanzahl wird die Schiebekulisse nun am Filtergehäuse längs verschoben, wodurch sich der Auflagepunkt der Feder in Richtung einer höheren oder einer niedrigeren Stufe ändert. Hierdurch wird der Federweg bezüglich der neutralen Lage der Balkenwaage verkürzt bzw. verlängert. Dadurch erfolgt eine entsprechende Veränderung des Meßbereichs.

Im Falle der Verstelleinrichtung gemäß Patentanspruch 6 kommt vorteilhafterweise eine Feder nach Anspruch 8 zur Anwendung. Dabei erfolgt die Verstellung im wesentlichen reibungsfrei.

Weiterhin sieht eine vorteilhafte Ausführungsform der vorliegenden Erfindung vor, daß die Anzeigeeinrichtung mit der Feinwaage zur mechanischen Anzeige durch einen Zeiger gekoppelt ist. Hierdurch ist beispielsweise keine externe Stromversorgung für eine digitale Anzeige oder eine Leuchtdiodenanzeige erforderlich, was ebenfalls vorteilhaft für den einfachen und kostengünstigen Aufbau der Dosiervorrichtung ist.

Ein vorteilhafter Meßbereich für die Feinwaage wird in Anspruch 10 angegeben. Dieser Bereich entspricht dem im haushaltsüblichen Rahmen verwendeten Volumen, das zur Herstellung eines Kaffeegetränks auftritt. Dabei wird von einem Volumen von maximal ca. 2 l, insbesondere 375 ml bis 1500 ml, d.h. 3 bis 12 Tassen á 125 ml ausgegangen. Als eine übliche Dosierung wird eine Kaffeemehlmasse von 6,5 g pro zubereiteter Tasse erachtet. Erfahrungsgemäß ist zur Herstellung eines milden, aber noch geschmackvollen Kaffees eine Minimalmenge von 5,5 g und eines starken, aber noch geschmackvollen Kaffees eine Maximalmenge von 7,5 g Kaffeemehl vorzusehen. Als Differenz liegen somit 2 g pro zubereiteter Tasse vor. Bei den oben angegebenen Mengen bedeutet dies für den gesamten Meßbereich, daß bei drei Tassen ein Meßbereich mit einer Differenz von 6 g und bei 12 Tassen ein Meßbereich mit einer Differenz von 24 g abgedeckt werden muß.

Schließlich sieht eine vorteilhafte Ausführungsform gemäß Patentanspruch 11 eine Kalibriereinrichtung vor, wobei die Kalibrierung der Eigenmasse beispielsweise durch Materialabtrag erfolgen kann.

Weitere Ausgestaltungen und Vorteile der Erfindung werden durch die Beschreibung der Ausführungsbeispiele unter Bezugnahme auf die beigefügten Zeichnungen erläutert. Darin zeigen:

Fig. 1 eine schematische Schnittdarstellung einer ersten Ausführungsform der vorliegenden Erfindung;

Fig. 2 eine schematische Schnittdarstellung einer zweiten Ausführungsform der vorliegenden Erfindung;

Fig. 3 eine schematische Schnittdarstellung einer dritten Ausführungsform der vorliegenden Erfindung;

Fig. 4 eine schematische Schnittdarstellung einer vierten Ausführungsform der vorliegenden Erfindung;

Fig. 5 eine schematische Ansicht einer erfindungsgemäßen Dosiervorrichtung.

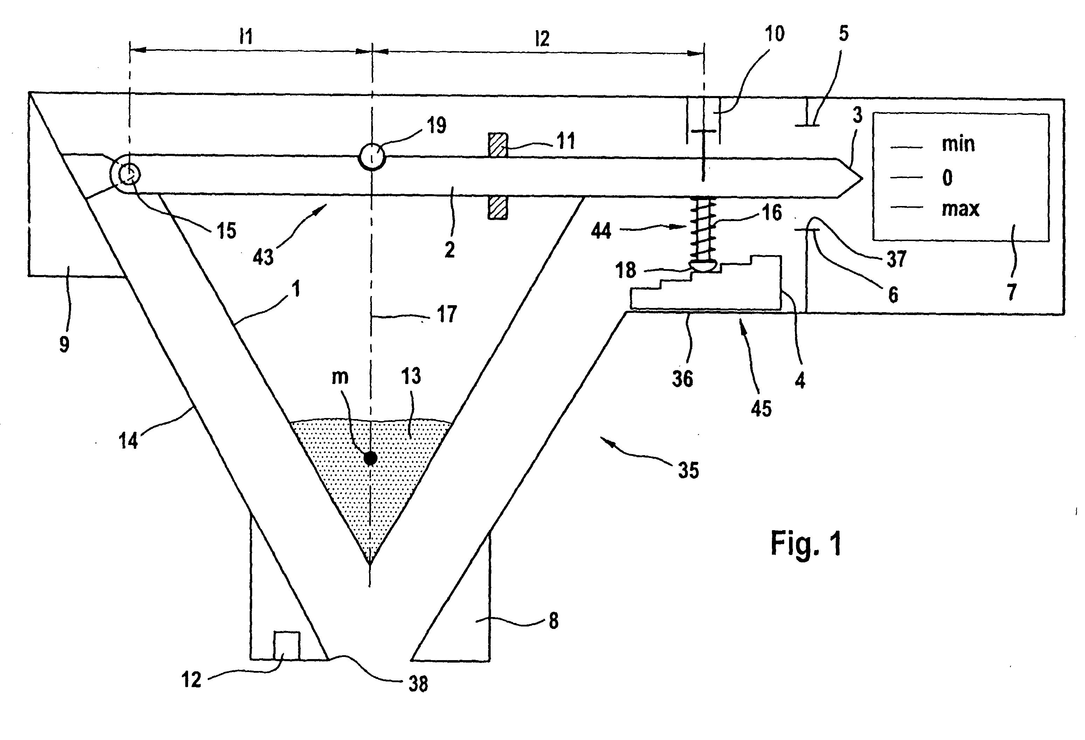

Fig. 1 zeigt eine schematische Schnittdarstellung durch eine vorteilhafte Ausführungsform einer erfindungsgemäßen Dosiervorrichtung 35, die ein im wesentlichen als konisches Spritzgußteil ausgebildetes Filtergehäuse 14 mit einem ebenfalls als Spritzgußteil ausgebildeten Waagebalken 2 aufweist, der zum einen über ein Festlager 15 sowie ein durch eine Dämpfereinrichtung 10 und eine Feder 16 gebildetes Gegengewicht mit dem Filtergehäuse 14 verbunden ist. An dem Waagebalken 2 mit Differenzialeffekt ist ein Auflager 19 für einen Filterhalter 1 vorgesehen, der das zu wiegende Substrat trägt. Der Filterhalter 1 ist dabei ein aus leichtem Vollmaterial oder als Gitter oder Strebenkorb hergestellter Kunststoffkonus. Die Feder 16 ist mittels eines Gleitschuhs 18 auf den Stufen einer Schiebekulisse 4 gleitend gelagert, die auf einer im Filtergehäuse 14 gebildeten Ebene 36 längs verschiebbar angeordnet ist. Am freien Ende des Waagebalkens ist ein Zeiger 3 angeordnet, der in bezug zu einer Anzeigeeinrichtung 7 gesetzt ist. Ferner weist das Filtergehäuse 14 in Höhe der Öffnung 37 für den Zeiger 3 einen oberen Anschlag 5 und einen unteren Anschlag 6 auf, welche den Ausschlag des Waagebalkens 2 nach oben bzw. nach unten begrenzen. Das Filtergehäuse 14 weist an einer Seite seines oberen Umfangs eine Einhängeeinrichtung 9 zum Einhängen des Filtergehäuses 14 in eine Kaffeemaschine auf. Am unteren, zulaufenden Ende des konischen Filtergehäuses 14 sind seitlich von einer Auslauföffnung 38 Füße 8 angeordnet, die dem Aufstellen des Filtergehäuses auf einem flachen Untergrund dienen, wenn das Filtergehäuse aus der Kaffeemaschine genommen ist. An den Füßen 8 ist eine Kalibriereinrichtung 12 zur Kalibrierung der Eigenmasse durch Materialabtrag vorgesehen. Der Massenschwerpunkt m des im Filterhalter 1 angeordneten Substrats, im vorliegenden Fall Kaffeemehl, ist etwa im Bereich der Mittellinie 17 des im wesentlichen kegelförmigen Filterhalters angeordnet. Die Hebelwege des Waagebalkens 2 ergeben sich somit durch die als l1 und l2 bezeichneten Strekken.

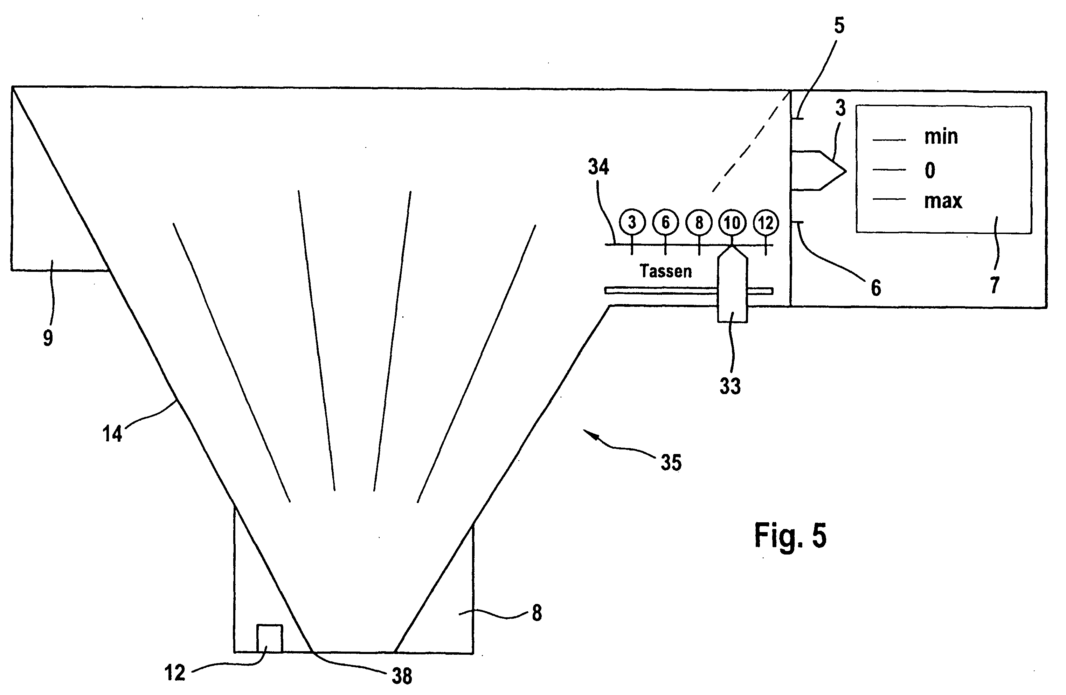

Eine schematische Ansicht einer entsprechenden Dosiervorrichtung ist in Fig. 5 gezeigt. Der Zeiger 3 und die Anzeigeeinrichtung 7 sind dabei hinter einer Plexiglasabdeckung angeordnet, um einen Berührschutz gegen äußere Eingriffe zu bilden. Die Anzeigeeinrichtung kann auch eine einstellbare bzw. justierbare Skala aufweisen, d.h. hier kann eine Einstellung für einen Lieblingskaffee, d.h. also eine Kaffeevorwahl für einen Kaffee bestimmter Geschmacksintensität, eingestellt werden, z .B. durch einen Reiter bzw. einen feststehenden Zeiger.

Beim Befüllen wird nun der in Fig. 5 dargestellte Schieber 33 auf die vorher eingefüllte Wassermenge, d.h. auf die entsprechend gewünschte Tassenzahl, eingestellt. Der Schieber 33 ist mechanisch mit der Schiebekulisse 4 gekoppelt. Durch die Einstellung der gewünschten Tassenzahl gleitet die Schiebekulisse 4 auf der Ebene 36, was eine entsprechende Änderung des Auflagerpunkts für den Gleitschuh 18 der Feder 16 bewirkt. Die Feder 16 wird dabei auf der Schiebekulisse 4 geführt. Im unbefüllten Zustand wird der Waagebalken 2 und damit der Zeiger 3 von der als Druckfeder ausgebildeten Feder 16 entsprechend nach oben verschoben und ggf. gegen den oberen Begrenzungsanschlag 5 gedrückt. Auf der Anzeigeeinrichtung 7 ist nun zu erkennen, daß der Befüllzustand unterhalb des minimal erforderlichen Bereichs ist. Beim Befüllen mit Kaffeemehl ändert sich zunächst die Stellung des Zeigers 3 nicht. Erst wenn sich die Füllmenge dem Bereich der minimalen Kaffeemehlmenge für die gewünschte Tassenanzahl nähert, beginnt sich der Waagebalken 2 und damit der Zeiger 3 langsam nach unten zu bewegen, d.h. die Masse m beginnt eine entsprechende Kraft auf die Druckfeder 16 auszuüben, so daß sich der Zeiger 3 abwärts bewegt. Sobald der Zeiger 3 die Marke min erreicht, weiß der Bediener, daß er die Füllmenge für einen wenig geschmacksintensiven, d.h. milden Kaffee erreicht hat. Durch entsprechende weitere Zugabe von Kaffeemehl senkt sich der Zeiger 3 auf der Anzeigeeinrichtung 7 weiter ab, bis er die Position 0 erreicht, die einen Kaffee mit normaler Geschmacksintensität kennzeichnet. Bei weiterer Zugabe wird der Zeiger bis auf die Position max abgesenkt, welche die Obergrenze für einen geschmacksintensiven, d.h. einen starken Kaffee kennzeichnet. Bei weiterer Zugabe von Kaffeemehl senkt sich der Waagebalken 2 und damit der Zeiger 3 bis auf den unteren Begrenzungsanschlag 6 ab, der unterhalb der Markierung max der Anzeigeeinrichtung 7 angeordnet ist. Der Benutzer sieht nun, daß der Kaffee zu stark werden würde und kann eine entsprechende Menge Kaffeemehl wieder entnehmen, bis der Zeiger 3 wieder in einem zulässigen Bereich angelangt ist. Die Befüllung mit Kaffeemehl ist nun abgeschlossen, das Filtergehäuse 14 kann nun in die hierfür vorgesehene Öffnung an der Kaffeemaschine eingeschoben werden. Um ein ständiges Aufliegen des Waagebalkens 2 auf dem unteren Auflager 6 während des Zulaufs von Brühwasser zu verhindern, kann der Waagebalken 2 durch eine Arretierung 11, die entweder beim Einschieben in die Kaffeemaschine oder beim Anbringen eines Deckels eingreift, arretiert werden. Die Arretierung 11 umfaßt den Waagebalken 2 von oben und von unten, wodurch dieser während des Brühvorgangs in einer neutralen Lage gehalten wird. Die Entriegelung des Waagebalkens erfolgt durch Betätigung eines nicht dargestellten Entriegelungsschalters.

Durch den Dämpfer 10 werden Schwingungen gedämpft, die ein Ablesen der Anzeigeeinrichtung 7 erschweren könnten. Die Schiebekulisse 4 ist entweder aus einem Kunststoff oder aus einem Metallwerkstoff hergestellt, wobei sie vorzugsweise spanabhebend bearbeitet ist. Mit der Kalibriereinrichtung 12 wird ein Offsetwert eingestellt, dieser ergibt sich wie folgt:

$$\text{Offset} \triangleq m_{\text{Filtereinsatz}} + m_{\text{Tüte}}.$$

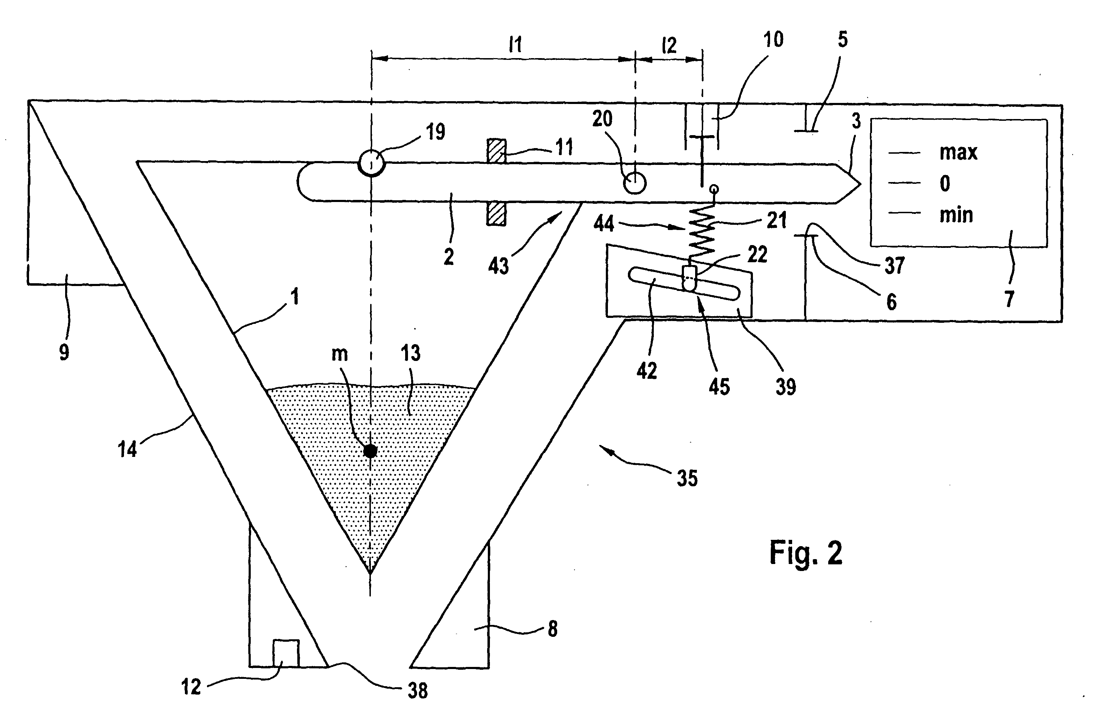

Fig. 2 zeigt eine weitere Ausführungsform einer erfindungsgemäßen Dosiervorrichtung, wobei im Gegensatz zu Fig. 1 das Festlager 20 zwischen dem Lager 19 zur Aufhängung des Filterhalters 1 und dem aus Dämpfungseinrichtung 10 und Zugfeder 21 gebildeten Gegengewicht angeordnet ist. Hierdurch ergibt sich eine Veränderung der Hebellängen l1, l2, die durch eine entsprechende Federauswahl der Feder 21 ausgeglichen werden kann. Im Gegensatz zu der Ausführungsform in Fig. 1 ist die Zugfeder 21 über einen Gleitbügel 22 mit der Schiebekulisse 39 verbunden, die auf der Ebene 36 des Filtergehäuses 14 angeordnet ist. Die Schiebekulisse 39 ist dabei ein leicht keilförmiger Vollkörper mit einem Längsschlitz 42 parallel zur abgeschrägten Oberseite. In dem Längsschlitz 42 ist der Gleitbügel 22 geführt, der mit der Zugfeder 21 verbunden ist. Durch die gegenüber Fig. 1 andere Positionierung des Lagers 20 des Waagebalkens 2 sind die Markierungen auf der Anzeigeeinrichtung 7 entgegengesetzt zu denen aus Fig. 1, d.h. die minimale und damit milde Kaffeemischung wird am unteren Ende der Skala und die maximale, also die geschmacksintensivere Kaffeemischung, wird am oberen Ende der Skala angezeigt. Ferner ist in Fig. 2 angedeutet, daß eine entsprechend größere Kaffeemehlmenge bei einer entsprechenden Tassenanzahl zu einer "normalen" Kaffeestärke führt, d.h. die Schiebekulisse 39 steht etwas über die Ebene 36 in das Innere des Filtergehäuses 14 hervor. Ferner ist der Massenpunkt m etwas nach oben entlang der Mittellinie des Filterhalters 17 verschoben. Einstellung und Kalibrierung erfolgt dabei analog wie bereits zu Fig. 1 beschrieben.

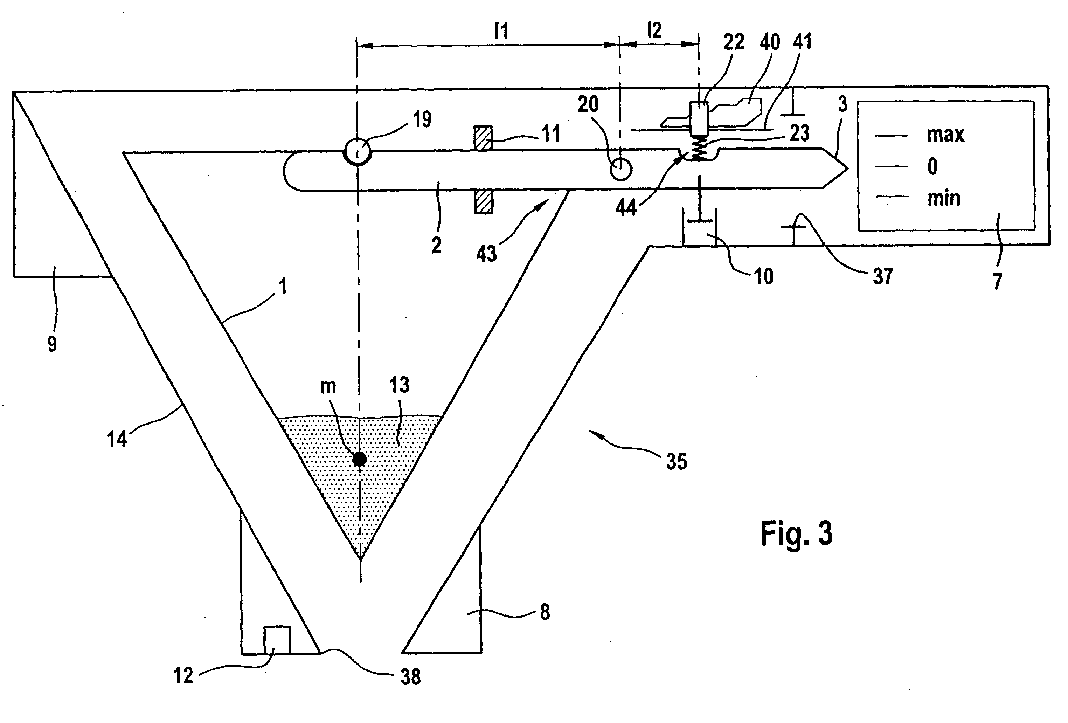

Fig. 3 zeigt eine schematische Schnittdarstellung einer weiteren Ausführungsform der vorliegenden Erfindung. Dabei kommt eine ähnliche Balkenwaage 43 wie in Fig. 2 zur Anwendung, wobei in diesem Falle eine Druckfeder 23 oberhalb des Waagebalkens 2 angeordnet ist. Eine Schiebekulisse 40 gleitet dabei auf einer im Filtergehäuse 14 angeordneten Ebene 41. Die Druckfeder 23 ist über einen Gleitbügel 22 mit der Schiebekulisse 40 verbunden, wobei der Gleitbügel 22 je nach Lage der Schiebekulisse 40 auf den jeweiligen Absätzen aufsitzt. Einstellung und Kalibrierung erfolgt analog zu Fig.1.

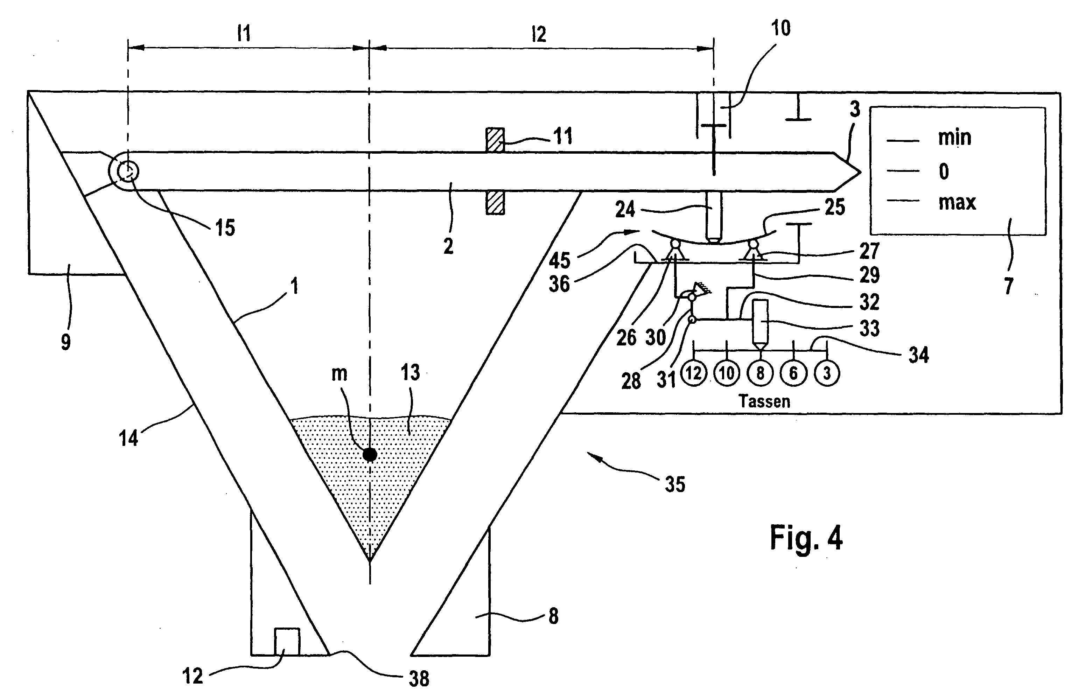

Fig. 4 zeigt eine weitere schematische Schnittdarstellung einer alternativen Ausführungsform der vorliegenden Erfindung. Darin kommt eine Balkenwaage 43 ähnlich der in Fig. 1 gezeigten zur Anwendung. Im Gegensatz zu Fig. 1 wird jedoch keine Schraubenfeder, sondern eine Blattfeder 25 im Gegengewicht zur Anwendung gebracht. Der Waagebalken 2 weist in Höhe der Dämpfungseinrichtung 10 einen von dieser weggerichteten Stift 24 auf, der auf einer Blattfeder 25 aufliegt. Die Blattfeder 25 ist an ihren Enden jeweils auf einem Gleitlager 26, 27 gelagert. Die Gleitlager sind über Hebelarme 28, 29 mit einer gemeinsamen Zug-/Druckstange 32 verbunden, die über den Schieber 33 in Längsrichtung parallel zur Ebene 36 verschiebbar ist. Der Hebel 28 ist etwa mittig an einem Festlager 30 gelenkig gelagert und ist mit der Zug-/Druckstange 32 über das Gelenk 31 verbunden. Der Hebel 29 hingegen ist starr direkt mit der Zug-/Druckstange 32 verbunden. Der Schieber 33 läßt sich entlang einer Skala 34, auf der die Tassenanzahl angegeben ist, verschieben.

Durch Änderung des Abstands zwischen den Gleitlagern 26, 27 wird die Blattfeder 25 härter bzw. weicher eingestellt. Im vorliegenden Beispiel wird bei einer Schieberstellung für drei Tassen der Hebel 29 des Gleitlagers 27 ganz nach rechts außen verschoben. Der Hebel 28 wird bei dieser Bewegung um das Festlager 30 geschwenkt, so daß das Gleitlager 26 ebenfalls bis ganz nach außen verschoben wird. Hierdurch zeigt die Blattfeder 25 eine weiche Charakteristik, d.h. sie reagiert schon auf geringere Gewichtsschwankungen. Ein erheblicher Vorteil dieser Einstellungvariante ist es, daß dieser Vorgang reibungsfrei ist. Die Kalibrierung erfolgt dabei wie zu Fig. 1 beschrieben.

Die Anordnung der Anzeigeeinrichtung 7 und des Zeigers 3 kann, wie in Fig. 1 bis 5 dargestellt, vorgesehen sein, d.h. als vorstehende Anzeigefläche, oder aber um 90° in die Zeichenebene hineingebogen sein, d.h. auch der Zeiger ist in diesem Fall in die Ebene hineingebogen. Hierdurch kann ein Herauskragen von Bauteilen aus der Kaffeemaschinenebene vermieden werden.

**Patentansprüche**

1. Dosiervorrichtung für ein Gerät zur Herstellung von Brühgetränken, mit der eine Substratmenge in Abhängigkeit von der für eine gewünschte Tassenanzahl eingesetzten Wassermenge und einer gewünschten Geschmacksintensität wählbar ist, wobei die Dosiervorrichtung (35) ein Filtergehäuse (14) mit einer Feinwaage (43), einem Filterhalter (1) und einer mit der Feinwaage (43) gekoppelten Anzeigeeinrichtung (7) aufweist, wobei die Anzeigeeinrichtung (7) zur Anzeige der Geschmacksintensität in das Filtergehäuse (14) integriert ist, **dadurch gekennzeichnet,** **daß** eine Einrichtung zur manuellen Vorwahl der Tassenanzahl und damit des Anzeigebereichs der Feinwaage (43) vorgesehen ist.

2. Dosiervorrichtung nach Anspruch 1, **dadurch gekennzeichnet,** **daß** die Feinwaage (43) als am Filtergehäuse (14) gelagerte Balkenwaage ausgebildet ist, an welcher der Filterhalter (1) gelenkig aufgehängt ist.

3. Dosiervorrichtung nach Anspruch 2, **dadurch gekennzeichnet,** **daß** die Balkenwaage (43) ein am Filtergehäuse (14) angeordnetes Festlager (15) und ein als Feder-/Dämpfer Einrichtung (44) ausgebildetes Gegengewicht aufweist.

4. Dosiervorrichtung nach Anspruch 3, **dadurch gekennzeichnet,** **daß** der Meßbereich der Balkenwaage (43) je nach gewählter Tassenanzahl durch die Einrichtung zur manuellen Vorwahl der Tassenanzahl mittels einer Einrichtung (45) zur Verstellung des Federwegs der Feder-/Dämpfer-Einrichtung (44) veränderbar ist.

5. Dosiervorrichtung nach Anspruch 4, **dadurch gekennzeichnet,** **daß** als Einrichtung (45) zur Verstellung des Federwegs eine Schiebekulisse (4) vorgesehen ist.

6. Dosiervorrichtung nach Anspruch 4, **dadurch gekennzeichnet,** **daß** als Einrichtung (45) zur Verstellung des Federwegs Gleitlager (26, 27) vorgesehen sind.

7. Dosiervorrichtung nach Anspruch 3, **dadurch gekennzeichnet,** **daß** als Feder der Feder-/Dämpfer-Einrichtung eine Schraubenfeder (16; 21; 23) vorgesehen ist.

8. Dosiervorrichtung nach Anspruch 3, **dadurch gekennzeichnet,** **daß** als Feder der Feder-/Dämpfer-Einrichtung eine Blattfeder (25) vorgesehen ist.

9. Dosiervorrichtung nach einem der vorangehenden Ansprüche, **dadurch gekennzeichnet,** **daß** die Anzeigeeinrichtung (7) mit der Feinwaage zur mechanischen Anzeige durch einen Zeiger (3) gekoppelt ist.

10. Dosiervorrichtung nach einem der vorangehenden Ansprüche, **dadurch gekennzeichnet,**

**daß** die Feinwaage einen Meßbereich von 0g bis 30g, vorzugsweise von 6g bis 24g aufweist.

11. Dosiervorrichtung nach einem der vorangehenden Ansprüche, **dadurch gekennzeichnet,** **daß** am Filtergehäuse (14) eine Kalibriereinrichtung (12) zum Kalibrieren der Feinwaage vorgesehen ist.

## Claims

1. A proportioning device for an appliance for the preparation of brewed beverages, with which a substrate is selectable in an amount responsive to the amount of water used for a desired number of cups and a desired aroma intensity, said proportioning device (35) comprising a filter housing (14) with a precision balance (43), a filter holder (1) and an indicating device (7) coupled to the precision balance (43), and said indicating device (7) being integrated into the filter housing (14) for indicating the aroma intensity, **characterized in that** provision is made for a device for manual preselection of the cup number and hence of the indicating range of the precision balance (43).

2. The proportioning device according to claim 1, **characterized in that** the precision balance (43) is configured as a beam balance that is mounted on the filter housing (14) and has the filter holder (1) suspended thereon in hinged manner.

3. The proportioning device according to claim 2, **characterized in that** the beam balance (43) includes a locating bearing (15) disposed on the filter housing (14) and a balance weight configured as a spring-and-damper unit (44).

4. The proportioning device according to claim 3, **characterized in that**, depending on the number of cups selected by the device for manual preselection of the cup number, the measuring range of the beam balance (43) is variable by means of a device (45) for adjusting the spring travel of the spring-and-damper unit (44).

5. The proportioning device according to claim 4, **characterized in that** provision is made for a sliding coulisse (4) as the device (45) for adjusting the spring travel.

6. The proportioning device according to claim 4, **characterized in that** provision is made for plain bearings (26, 27) as the device (45) for adjusting the spring travel.

7. The proportioning device according to claim 3, **characterized in that** provision is made for a helical spring (16; 21; 23) as the spring of the spring-and-damper unit.

8. The proportioning device according to claim 3, **characterized in that** provision is made for a leaf spring (25) as the spring of the spring-and-damper unit.

9. The proportioning device according to any one of the preceding claims, **characterized in that** the indicating device (7) is coupled to the precision balance for mechanical indication by a pointer (3).

10. The proportioning device according to any one of the preceding claims, **characterized in that** the precision balance covers a measuring range from 0 g to 30 g, preferably from 6 g to 24 g.

11. The proportioning device according to any one of the preceding claims, **characterized in that** provision is made for a calibrating device (12) on the filter housing (14) for calibrating the precision balance.

**Revendications**

1. Dispositif de dosage pour un appareil servant à fabriquer des boissons obtenues par infusion, à l'aide duquel on peut choisir une quantité de substrat en fonction de la quantité d'eau utilisée pour un nombre de tasses désirées, et une intensité de goût désirée, le dispositif de dosage (35) comprenant un boîtier à filtre (14) comportant une balance de précision (43), un porte-filtre (1) et un dispositif d'affichage (7) couplé à la balance de précision, le dispositif d'affichage (7) utilisé pour l'affichage de l'intensité du goût étant intégré dans le boîtier à filtre (14), **caractérisé en ce qu'**il est prévu un dispositif pour présélectionner manuellement le nombre de tasses et par conséquent la zone d'affichage de la balance de précision (43).

2. Dispositif de dosage selon la revendication 1, **caractérisé en ce que** la balance de précision (43) est agencée sous la forme d'une balance romaine montée sur le boîtier à filtre (14) et à laquelle le porte-filtre (1) est suspendu de façon articulée.

3. Dispositif de dosage selon la revendication 2, **caractérisé en ce que** la balance romaine (43) comporte un support fixe (15) monté sur le boîtier à filtre (14), et un contrepoids agencé sous la forme d'un dispositif à ressort/amortisseur (44).

4. Dispositif de dosage selon la revendication 3, **caractérisé en ce que** la plage de mesure de la balance romaine (43) peut être modifiée, en fonction du nombre choisi de tasses, par le dispositif de présélection manuelle du nombre de tasses, à l'aide d'un dispositif (45) pour régler la course élastique du dispositif à ressort/amortisseur (44).

5. Dispositif de dosage selon la revendication 4, **caractérisé en ce qu'**il est prévu un coulisseau (4) en tant que dispositif (45) pour régler la course élastique.

6. Dispositif de dosage selon la revendication 4, **caractérisé en ce que** des paliers lisses (26, 27) sont prévus comme dispositif (45) pour régler la course élastique.

7. Dispositif de dosage selon la revendication 3, **caractérisé en ce qu'**un ressort hélicoïdal (16; 21; 23) est prévu en tant que ressort du dispositif à ressort/amortisseur.

8. Dispositif de dosage selon la revendication 3, **caractérisé en ce qu'**un ressort à lame (25) est prévu en tant que ressort du dispositif à ressort/amortisseur.

9. Dispositif de dosage selon l'une des revendications précédentes, **caractérisé en ce que** le dispositif d'affichage (7) est couplé à la balance de précision pour l'affichage mécanique au moyen d'une aiguille (3).

10. Dispositif de dosage selon l'une des revendications précédentes, **caractérisé en ce que** la balance de précision comporte une plage de mesure de 0 g à 30 g, de préférence de 6 g à 24 g.

11. Dispositif de dosage selon l'une des revendications précédentes, **caractérisé en ce qu'**un dispositif d'étalonnage (12) pour l'étalonnage de la balance de précision est prévu sur le boîtier à filtre (14).

Fig. 1

EP 1 166 696 B1

Fig. 2

max
0
min

EP 1 166 696 B1

Fig. 3

max
0
min

Fig. 4

min
0
max

Tassen

EP 1 166 696 B1

Fig. 5